Europäisches Patentamt

(19) European Patent Office

Office européen des brevets

(11) Publication number: **0 027 652**
A1

## (12) EUROPEAN PATENT APPLICATION

(21) Application number: **80106344.7**

(22) Date of filing: **17.10.80**

(51) Int. Cl.³: **F 16 B 37/04**

(30) Priority: **19.10.79 US 86309**

(43) Date of publication of application:
**29.04.81 Bulletin 81/17**

(84) Designated Contracting States:
**DE FR GB SE**

(71) Applicant: **Perrault, Frederick**
**2644 West 225th Street**
**Torrance, California 90505(US)**

(71) Applicant: **Perrault, Raymond E.**
**2404 Colt Road**
**Rancho Palos Verdes, California 90274(US)**

(72) Inventor: **Perrault, Frederick**
**2644 West 225th Street**
**Torrance, California 90505(US)**

(72) Inventor: **Perrault, Raymond E.**
**2404 Colt Road**
**Rancho Palos Verdes, California 90274(US)**

(74) Representative: **Lehmann, Klaus, Dipl.-Ing. et al,**
**Patentanwälte Schroeter & Lehmann Postfach 70 17 47**
**Lipowskystrasse 10**
**D-8000 München 70(DE)**

(54) **T-nut.**

(57) The T-nut fastener (10) includes an internally threaded barrel (11) with a head (14) projecting radially outwardly at one end. Prongs (17,20) extend from the periphery of the head (14), including portions (24,27) doubled back under the head (14) and end portions overlying the outside of the barrel (11), the tip ends (38,41) of which may be spaced slightly from the barrel periphery. The fastener (10) may be made from sheet metal with an undercut tab (45) extending in one or both directions from a longitudinal seam (43,44) through the length of the fastener (10).

FIG. 5.

EP 0 027 652 A1

-1-

T-NUT

T-nuts are used widely in the manufacture of furniture
and elsewhere, providing a ready means for attaching two elements together, with the nut portion of the fastener being permanently secured to one of the elements. Typically, a T-nut
includes a threaded barrel from one end of which projects a flat
head. Prongs are struck from the head so as to project downwardly and fall in a plane radial to the barrel of the fastener.
The prongs are driven into the workpiece upon installation of
the fastener which prevents the T-nut from rotating when entered
by a mating stud or bolt.

The head of the T-nut engages the surface of the
workpiece to limit axial movement of the T-nut into the opening
in the workpiece that receives the barrel. However, if the
force exceeds a certain value, the head will be deflected inwardly to assume a generally tubular shape and the fastener can
be pulled through the opening as the T-nut fails. There is very
little resistance to axial movement in the other direction,
which results only from the friction between the prongs and the
workpiece into which they are driven. Thus, conventional T-nuts
are limited in the amount of axial force they can withstand in
either direction.

The present invention provides an improved T-nut with
considerably greater resistance to axial movement in either direction. The T-nut of this invention includes a threaded barrel
from one end of which projects a head somewhat as in conventional designs. However, the prongs of the T-nut extend from the
periphery of the head and fall in planes perpendicular to the radius of the barrel. Each prong includes one portion overlying the undersurface of the head and another portion overlying the outer surface of the barrel.

Upon installation, the prongs become flared outwardly at an angle relative to the surface of the barrel and no longer lie close to the barrel. This securely locks the T-nut in position, resisting axial movement in either direction.

Forces which would tend to dislodge the fastener by pushing it outwardly in the direction of the head end of the fastener are resisted by the inclined prongs and the material of the workpiece on either side of the prongs.

For a force tending to pull the fastener out of the opening in the opposite direction, the prongs and material of the workpiece again effectively resist movement. Even under high loading, the head of the fastener cannot bend inwardly to assume a tubular shape, as it must to fail in response to such forces. This is because the inclined prongs, locked in material of the workpiece, hold the head in its radial position relative to the barrel, and prevent it from becoming deflected. The force imposed on the prongs tends to drive them deeper into the workpiece, rather than to pull them out.

Preferably the T-nut of this invention is made from sheet metal bent to its three-dimensional configuration. Consequently, there is a longitudinal seam extending through the barrel and the head. An undercut tab may extend from one side of the seam into a complementary slot in the barrel on the opposite side of the seam to prevent the seam from opening up when the fastener is under load.

In the event the fastener is to receive a stud or bolt from either end, two undercut tabs may be provided, one extending in one direction from the seam and the other in the opposite direction. This is because the tabs provide greater resistance to opening up the seam for a threaded member entering from one end than they do from the other.

Figure 1 is a perspective view of the fastener of this invention;

Figure 2 is a longitudinal sectional view of the fastener, taken along lines 2-2 of Figure 1;

Figure 3 is a top plan view of the fastener;

Figure 4 is a bottom plan view;

Figure 5 is an enlarged sectional view, partially in elevation, showing the fastener as installed in a workpiece; and

Figure 6 is an elevational view of a modified threaded member having oppositely projecting tabs at the seam.

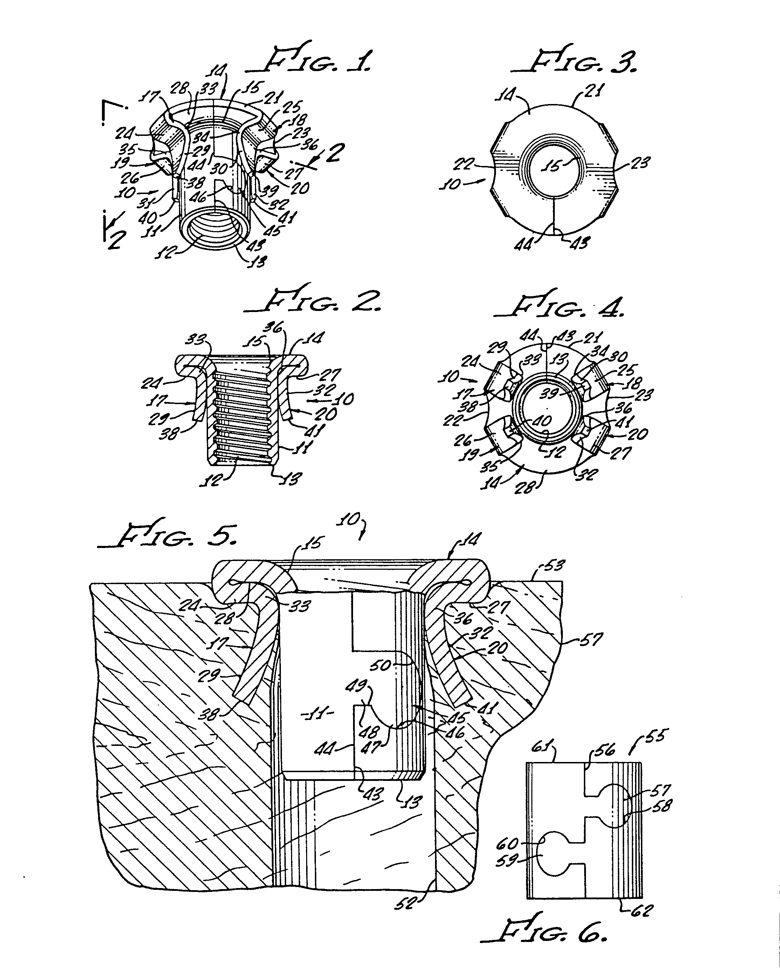

The fastener 10 illustrated in Figures 1 through 6 is a T-nut comprising a split sleeve with attached head and prongs integrally formed from sheet metal. The fastener includes an elongated cylindrical barrel 11 of constant exterior diameter which is provided with an internal thread 12 extending inwardly from the chamfered outer end 13 of the barrel throughout the length of this portion of the fastener. At the opposite end of the barrel 11 is an outwardly flaring flat head 14 which falls in a radial plane relative to the axis of the barrel. The head 14 and the barrel 11 are connected by an annular portion 15 which is rounded so as to be convex as viewed from the exterior of the fastener at the head end. The thread 12 stops short of the connecting portion 15.

Four prongs 17, 18, 19, and 20, which through most or all of their lengths are wider than the thickness of the sheet metal from which the fastener 10 is made, connect to the generally circular outer peripheral edge 21 of the head 14. The prongs are arranged in pairs so that the prongs 17 and 19 are positioned relatively close to each other, as are the prongs 18 and 20. The peripheral edge 22 of the head 14 between the prongs 17 and 19 is concave, which also is true of the edge 23 between the prongs 18 and 20. The prongs 17 and 20 are diametrically opposite each other and the prongs 18 and 19 are in a similar relationship.

Adjacent the head 14 the inner portions 24, 25, 26, and 27 of the prongs overlie and their principal surfaces are parallel to the undersurface 28 of the head 14, and extend inwardly to the barrel 11. From this location the prongs are bent 90° to provide outer end portions 29, 30, 31, and 32 which extend away from the head 14 and toward the outer end 13 of the barrel. This results in bent connecting parts 33, 34, 35, and 36 between the inner portions of the prongs and the outer end portions. The connecting parts are adjacent the head 14 and the rounded annular portion 15. The principal surfaces of the end portions 29, 30, 31, and 32 of the prongs are generally normal to the radius of the barrel 11, and converge in width toward their outer ends to define points 38, 39, 40, and 41. The end portions 29, 30, 31, and 32 of the prongs incline slightly away from the barrel 11 so that the points 38, 39, 40, and 41 are spaced a short distance away from the outer barrel surface.

Inasmuch as the fastener 10 is formed from a flat sheet of metal, it includes a longitudinal split running through the barrel 11, the interconnecting portion 15 and the head 14, midway between the prongs 17 and 18. The result is a seam formed by abutting edges 43 and 44. These edges are not welded, brazed or otherwise secured together. Resistance to opening up at the seam is enhanced by an undercut tab 45 which projects circumferentially from the edge 43 in the central part of the barrel 11 and fits within a similarly shaped recess or slot 46 inwardly of the edge 44. The tab 45 is a continuation of the wall of the barrel 11, being curved about the longitudinal axis and having a portion of the thread 12 on its inner surface. The recess 46 is cut entirely through the wall of the barrel. The outer portion 47 of the tab 45 is rounded and connects to a narrower neck 48 that extends to the edge 43. The outer rounded portion 47 is offset relative to the neck 48 in the direction of the end 13 of the barrel 11. The recess 46, being complementary to the tab 45, includes a restricted entrance 49 through which the neck 48 of the tab extends, and an enlarged inner portion 50. Because of the restricted entrance 49 and the undercut configuration of the tab 45, abutment surfaces are provided so that the tab is locked in the recess and will not be pulled out by loads imposed upon it during use of the fastener. This, in turn, precludes separation of the edges 43 and 44 so that the seam does not open up to allow the mating fastening element to slip out.

The head 14 and the rounded juncture 15 between the head and the barrel 11 act as a rib to stiffen the fastener and help resist forces which would tend to cause the seam to open up. It is because of the strength at the head end of the fastener 10 that the tab 45 is offset oppositely toward the barrel end 13. This enables the tab 45 to provide its maximum holding force in the vicinity of the outer end 13 of the barrel where it is needed.

As shown in Figure 5, the fastener 10 is associated with a workpiece 51, such as a portion of the wood frame of an article of furniture, and is ready to receive a mating bolt or stud. The workpiece 51 is prepared by forming a cylindrical opening 52 in it of a diameter slightly larger than the outside diameter of the barrel 11. For installation, the barrel is inserted into the upper end of the opening 52 and driven downwardly until the head and the inner doubled over portions 24, 25, 26, and 27 of the prongs approach the upper surface 53 of the workpiece 51 to limit the movement.

As the fastener 10 is driven downwardly into the opening 52 in the workpiece 51, the points 38, 39, 40, and 41 of the prongs cut into the workpiece along the surface of the opening. Some of the wood of the workpiece adjacent the opening 52 is forced between the barrel 11 and the outer portions 28, 29, 30, and 31 of the prongs 17, 18, 19, and 20. This is assured by the outward inclination of the ends of the prongs, by virtue of which their points 38, 39, 40, and 41 are spaced away from the surface of the barrel. When the wood enters the space between the end portions 29, 30, 31, and 32 and the barrel, it acts as a wedge causing these end portions of the prongs to be flared outwardly away from the barrel at an increased angle as the fastener is moved axially. The ability of the prongs to be bent outwardly in this way is enhanced by their orientation such that their principal surfaces are generally perpendicular to the radius of the barrel 11.

The result is a greatly augmented retention force for maintaining the fastener 10 in the workpiece. The angled prongs lock in the material of the workpiece 51 to preclude movement in either direction.

In order to pull the fastener 10 through the opening 52 in the direction of the end 13 of the barrel, that is, downwardly as illustrated, it would be first necessary to cause the head 14 to be collapsed inwardly to approximate a tubular shape permitting it to fit within the opening 52. In order to do so, however, the prongs 17, 18, 19, and 20 must be pulled out of the material of the workpiece to allow the head to be deflected. This does not take place because a downward force on the barrel merely pushes the prongs further into the workpiece instead of pulling them out. The workpiece produces a reaction on the prongs, when such a downward force is exerted, tending to pivot them upwardly about the connecting parts 33, 34, 35, and 36, and push them inwardly against the barrel. However, the prongs cannot pivot upwardly because of the material of the workpiece above them. Also, the bent connecting parts 33, 34, 35, and 36 of the prongs bear against the outer surface of the barrel to resist pivotal movement of the prongs. The force pushing the prongs inwardly also is resisted by the engagement of the connecting parts 33, 34, 35, and 36 of the prongs and the barrel 11, and the double thickness of the fastener along the undersurface of the head 14 and the rounded annular portion 15.

The reaction on the prongs in response to a downward force on the nut yields an added advantage from the resulting inward force on the barrel 11. Because the connecting parts 33, 34, 35, and 36 of the prongs press inwardly against the barrel surface, they help hold the edges 43 and 44 together and significantly add to the resistance to opening the longitudinal seam. Therefore, an increased force on the nut produces a greater ability for the nut to preseve its shape so that the mating bolt or stud will be retained and the threads will not strip. Consequently, the prongs hold the head in position and the fastener does not fail under severe loading.

Axial movement toward the head end, or upwardly as shown in Figure 5, also is prevented by the material of the workpiece around the outwardly inclined prongs. The inclination given the prongs upon installation causes a mechanical lock to be created to retain against axial movement in the direction of the head. Therefore, the fastener of this invention is held much more securely in the workpiece than conventional T-nut fasteners, which merely have prongs that extend straight into the workpiece and have no outward flare.

In the embodiment illustrated in Figures 1-5, the thread 12 is a right-hand thread, for which reason the tab 45 projects circumferentially to the right from the seam as the fastener is viewed from the end 13 where the mating stud enters. That is to say, the tab 45 projects in the same direction as that of the rotation of the stud or bolt relative to the fastener 10. This is because a greater resistance to opening up the seam is realized if the tab extends in this direction. In other words, if the tab were to project from the edge 44 and extend circumferentially to the left of the seam, as viewed from the end 13, a less beneficial result would be obtained where right-hand threads are used. Leftward projections of the tab, however, would be preferred if left-hand threads were provided in the fastener. Thus, in the embodiment illustrated, the mating stud should enter the end 13 of the barrel for maximum strength.

In the event that the mating externally threaded part may enter the fastener from either end as it is used, maximum resistance to opening the seam is accomplished by providing two tabs projecting in opposite direction, as shown in Figure 6. Here the fastener 55 is in the form of a threaded sleeve, split longitudinally along a seam 56. As shown, the seam 56, other than at the location of the tabs, is straight and parallel to the longitudinal axis of the fastener. However, the seam 56 may be inclined relative to the longitudinal axis and it need not be straight. One undercut tab 57 projects to the right from the seam, as the fastener is illustrated, to enter a recess 58. The other tab 59 projects to the left from the seam and is received within a recess 60. In this manner there is a tab projecting so as to provide maximum resistance to the opening of the seam whether the mating element enters from the upper end 61 or the bottom end 62 of the fastener 55. As before, the tabs 57 and 59 are curved continuations of the wall of the fastener, with a portion of the internal thread being formed on each of the tabs. The recesses 58 and 60 are cut entirely through the wall of the fastener so as to define slots.

CLAIMS:

1. A fastener comprising

an internally threaded barrel (11),

an outwardly projecting head (14) at one end of said barrel,

and a plurality of prongs (17, 18, 19, 20) at said one end of said barrel,

said prongs overlying said barrel and having first portions (33, 34, 35, 36) adjacent said head and outer end portions (29, 30, 31 32) extending toward the opposite end of said barrel,

whereby when said barrel is driven into a workpiece said prongs enter said workpiece and are flared outwardly away from said barrel by the material of said workpiece.

2. A device according to claim 1 in which said outer end portions (29, 30, 31, 32) of said prongs have tips (38, 39, 40, 41) which are spaced outwardly from said barrel for facilitating the entry of said material of said workpiece between said prongs and said barrel.

3.  The fastener according to claim 1 or 2 including an annular connecting element (15) between said head and said barrel, said connecting element being convexly rounded as viewed from the exterior of said one end of said barrel, said first portions of said prongs being adjacent said annular connecting element.

4.  The fastener according to claims 1, 2 or 3 in which said outer end portions of said prongs have principal surfaces which are substantially normal to the radius of said barrel.

5.  The fastener according to any of the preceding claims in which each of said prongs includes an inner portion (24; 25, 26, 27) overlying the undersurface of said head.

6.  A fastener according to claim 5 in which said inner portions of said prongs connect to the outer periphery of said head.

7.  A fastener according to claim 3 in which the thread of said internally threaded barrel stops short of said annular connecting element.

8. A fastener according to any of the preceding claims in which said fastener includes a longitudinal split extending through said barrel and said head so as to form a seam (43, 44), and including an undercut tab (45) extending from one side of said seam to beyond the opposite side of said seam, said barrel including a recess (46) substantially complementarily receiving said undercut tab for thereby resisting forces tending to open up said barrel at said seam.

9. A fastener according to claim 8 in which said undercut tab includes an enlarged rounded outer portion (47) and a relatively narrow neck portion (48) connecting said outer portion to said one side of said seam, said outer portion being offset relative to said neck portion in the direction of said opposite end of said barrel.

0027652

FIG. 1.

FIG. 3.

FIG. 2.

FIG. 4.

FIG. 5.

FIG. 6.

**0027652**
Application number

EP 80 10 6344.7

## EUROPEAN SEARCH REPORT

**European Patent Office**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | GB - A - 966 054 (ILLINOIS TOOL WORKS)  * fig. 1 * | 1-4,6, 7 | F 16 B 37/04 |
| X | US - A - 3 078 900 (R.H. WALKER)  * fig. 4 * | 1-4,6 | |
| | US - A - 2 818 901 (P.D. BECKER et al.)  * fig. 4 * | 1 | **TECHNICAL FIELDS SEARCHED (Int. Cl.³)** |
| | US - A - 3 480 061 (W.H. LEISTNER)  * fig. 3 * | 1 | A 47 L 13/00  F 16 B 12/00  F 16 B 37/04 |
| | US - A - 3 599 691 (N.J. HUGHES)  * fig. 3 * | 1 | |
| | GB - A - 874 391 (T. MARSHALL & CO.) | 8,9 | |
| | US - A - 3 258 822 (R.D. SCHLESCH et al.)  * fig. 3 * | 8,9 | **CATEGORY OF CITED DOCUMENTS** |
| A | US - A - 2 108 399 (W.R. ALLEN, III) | | X: particularly relevant  A: technological background  O: non-written disclosure  P: intermediate document  T: theory or principle underlying the invention  E: conflicting application  D: document cited in the application  L: citation for other reasons |
| A | US - A - 2 102 558 (G. JOHNSON) | | |

&: member of the same patent family, corresponding document

| X | The present search report has been drawn up for all claims | |
|---|---|---|
| Place of search Berlin | Date of completion of the search 19-01-1981 | Examiner ZAPP |

EPO Form 1503.1 06.78